# FASCICULE DE BREVET EUROPEEN

(11) **EP 0 615 502 B1**
(45) Date de publication et mention de la délivrance du brevet: **04.12.1996**
(21) Numéro de dépôt: 93920711.4
(22) Date de dépôt: 13.09.1993
(51) Int. Cl.: B62D 5/24

(54) **DIRECTION ASSISTEE A HAUTE PERFORMANCE**
HOCHLEISTUNGSHILFSKRAFTLENKUNG
HIGH PERFORMANCE POWER STEERING

(30) Priorité: 15.10.1992 ES 9202048
(43) Date de publication de la demande: 21.09.1994
(73) Titulaire: ALLIEDSIGNAL AUTOMOTIVE ESPANA, S.A., 08400 Barcelona (ES)
(72) Inventeur: CORTES GUASCH, Esteve, E-08304 Mataro (ES); BACARDIT, Juan, Simon, E-08013 Barcelone (ES)
(74) Mandataire: Price, Nigel John King
(86) Numéro de dépôt international: EP9302475
(87) Numéro de publication internationale: WO9408836

(56) Documents cités:
- EP-A- 0 424 202
- WO-A-91/07304
- CH-A- 568 492
- DE-U- 9 007 387
- GB-A- 882 417
- US-A- 4 128 046
- OLEODINAMICA, PNEUMATICA vol. 18, no. 1 , Janvier 1977 , MILANO IT page 171

## Description

La présente invention concerne un dispositif d'assistance hydraulique, notamment utilisable comme servodirection pour un véhicule à moteur, et propre à convertir un mouvement de rotation d'entrée en un mouvement de rotation de sortie, ce dispositif comprenant au moins :
- un boîtier dont une partie au moins forme un cylindre de révolution autour d'un axe principal ;
- un arbre d'entrée logé dans le boîtier suivant la direction de cet axe principal, fixe en translation suivant cette direction, et entraîné en rotation autour de cet axe principal par le mouvement de rotation d'entrée ;
- un arbre de sortie non coplanaire à l'arbre d'entrée et de direction sensiblement perpendiculaire à celle de ce dernier ;
- un distributeur hydraulique rotatif susceptible d'être actionné par rotation de l'arbre d'entrée pour provoquer une différence de pression entre des première et seconde chambres définies dans ledit cylindre ;
- un piston logé dans le boîtier pour y coulisser axialement, en partie au moins sous l'effet de ladite différence de pression, ce piston étant sensiblement coaxial à l'arbre d'entrée, entourant en partie au moins ce dernier, et présentant d'une part une section d'étanchéité séparant les deux chambres de façon étanche et d'autre part une section de transmission dotée d'une crémaillère engrenant avec un secteur denté lié en rotation à l'arbre de sortie, et ;
- un convertisseur de mouvement disposé entre l arbre d'entrée et le piston pour convertir un mouvement de rotation du premier en un mouvement de translation du second.

Un dispositif de ce type est bien connu dans l'art antérieur et se trouve par exemple décrit dans le brevet US 4 128 046.

En dépit de son fonctionnement globalement très satisfaisant, un tel dispositif présente un encombrement et un poids relativement élevés.

Il exige par ailleurs un ajustage du jeu de l'engrènement du secteur denté avec la crémaillère, qui en augmente la complexité de fabrication et le coût.

Dans ce contexte, le but de la présente invention est de proposer un dispositif du type précité présentant des caractéristiques fonctionnelles de performances supérieures à celles du dispositif connu, et notamment une taille et un poids réduits pour une même puissance d'assistance.

Ce but est atteint, selon l'invention, grâce à un dispositif essentiellement caractérisé en ce que la section de transmission du piston présente, vue suivant la direction dudit axe principal, un profil à deux branches en forme de U dont les branches forment toutes deux crémaillères et engrènent, en des lieux géométriques respectifs sensiblement coplanaires entre eux et audit axe principal, avec des secteurs dentés respectifs et solidaires l'un de l'autre et de l'arbre de sortie.

Ainsi, contrairement au dispositif connu et décrit dans le brevet précité, le dispositif de l'invention permet d'éviter que la réaction du couple de sortie sur la section de transmission du piston ne fasse apparaître sur celle-ci, en plus d'une force axiale, un couple parasite qui, en raison de l'engrènement excentré du secteur denté sur la crémaillère, tend à faire tourner le piston autour d'un axe perpendiculaire à sa direction de translation et provoque des forces de frottement qui réduisent le rendement global du dispositif.

Selon un autre aspect de l'invention, le convertisseur de mouvement comprend de préférence d'une part un manchon essentiellement cylindrique, logé avec jeu à l'intérieur du profil en forme de U formé par le piston, et présentant sur sa surface interne un chemin de billes hélicoïdal, et d'autre part des moyens de fixation du manchon sur le piston, propres à interdire pratiquement toute rotation relative du piston et du manchon autour dudit axe principal, et toute translation relative autre que des translations relatives suivant des directions perpendiculaires audit axe principal.

Une telle disposition rend possible un certain décentrage du piston, et notamment de sa section de transmission, par rapport à l'arbre d'entrée, et permet donc d'absorber les tolérances de fabrication des différentes pièces sans faire apparaître de contraintes ni nécessiter de réglages.

Par exemple, les moyens de fixation comprennent :
- un élargissement radial du manchon ;
- des butées axiales formées par le piston et disposées en regard de l'élargissement radial du manchon ;
- deux ergots saillant diamétralement de l'élargissement radial,
- deux bagues élastiques non planes formant ensemble deux logements à l'intérieur desquels les deux ergots sont respectivement insérés et peuvent coulisser suivant leur direction commune sans liberté de rotation autour dudit axe principal,
- au moins une extension radiale de chaque bague, disposée à 90°, pour un référentiel angulaire centré sur cette bague, par rapport à chaque logement partiellement formé par cette bague, et
- au moins deux rainures prévues dans le piston, chaque extension radiale de chaque bague étant destinée à être reçue dans l'une de ces rainures et s'y trouvant logée à coulissement suivant sa direction radiale, et en butée contre elle selon une direction tangentielle à cette bague.

Par ailleurs, il est avantageux que l'arbre d'entrée traverse, de façon étanche, la section d'étanchéité du piston et que les butées axiales formées par le piston soient situées dans cette section d'étanchéité, ces caractéristiques contribuant à augmenter d'une part la compacité du dispositif et d'autre part la liberté de mouvement du piston, au niveau de sa section de transmission, par rapport à l'arbre d'entrée.

Un autre avantage substantiel peut être obtenu, avec le dispositif de l'invention, en le dotant de moyens de poussée élastique prenant appui sur le boîtier pour appliquer, sur une surface de contact que présente la section de transmission du piston du côté opposé aux crémaillères, une force élastique dirigée vers lesdits secteurs dentés.

En effet, quel que soit le soin apporté à la réduction du jeu entre la crémaillère et le secteur denté dans les dispositifs connus, la suppression totale du jeu n'est possible que pour les positions du piston voisines de sa position centrale. En revanche, dans un dispositif conforme à l'invention et muni de tels moyens de poussée élastique, le jeu entre les mouvements de rotation d'entrée et de sortie est insensible quelle que soit la position du piston.

Par exemple, ces moyens de poussée élastique comprennent au moins un rouleau monté à rotation autour d'au moins un premier axe de rotation sensiblement parallèle à la direction de l'arbre de sortie, ce rouleau roulant sur ladite surface de contact tout en étant élastiquement sollicité vers elle.

Dans un mode de réalisation possible, le premier axe de rotation du rouleau est lié à un second axe de rotation, sensiblement parallèle au premier, excentré par rapport à lui, et élastiquement sollicité dans un sens propre à rapprocher le premier axe de rotation de ladite surface de contact.

Le second axe de rotation peut alors être sollicité par un ressort à profil annulaire présentant deux extrémités adoptant le long de ce profil annulaire des positions angulaires relatives dont elles peuvent s'écarter élastiquement, une première de ces deux extrémités étant fixée au boîtier et la seconde étant liée en rotation au second axe de rotation.

Par exemple, le ressort à profil annulaire est un anneau ouvert à une seule spire et à ouverture élastique.

Dans un autre mode de réalisation possible, les moyens de poussée élastique comprennent au moins un rouleau présentant un axe de rotation et de translation sensiblement parallèle à la direction de l'arbre de sortie, ce rouleau étant élastiquement sollicité, par une force dirigée suivant cet axe de rotation et de translation, contre une partie au moins de la surface de contact qui se trouve orientée parallèlement à l'axe principal et obliquement par rapport audit axe de rotation et de translation.

D'autres caractéristiques et avantages de l'invention ressortiront clairement de la description qui en est faite ci-après, à titre indicatif et nullement limitatif, en référence aux dessins annexés, dans lesquels :
- La Figure 1 est une vue en coupe partielle du dispositif de l'invention suivant la ligne I-I de la Figure 5 ;
- La Figure 2 est une vue en perspective du piston ;
- La Figure 3 est une vue en perspective de l'arbre de sortie et des secteurs dentés ;
- La Figure 4 est une vue en perspective des bagues élastiques ;
- La Figure 5 est une vue en coupe du dispositif de l'invention suivant la ligne V-V de la Figure 1 ;
- La Figure 6 est une vue en coupe du dispositif de l'invention suivant la ligne VI-VI de la Figure 1 ;
- La Figure 7, semblable à la Figure 5, illustre une variante des moyens de poussée élastique ;
- La Figure 8 est un détail d'une vue en coupe faite suivant la ligne VIII-VIII de la Figure 7 ;
- La Figure 9, semblable à la Figure 5, illustre une variante des moyens de poussée ; et
- La Figure 10, semblable à la Figure 1, illustre encore une autre
variante des moyens de poussée élastique.

Par convention, deux pièces qui, en fonctionnement, se trouvent solidaires l'une de l'autre pourront, par soucis de clarté et de concision, être considérées dans la description qui suit comme constituant une seule et même pièce, l'homme de l'art étant en mesure, sur la base des dessins et de son expérience, de reconnaître lorsqu'elle apparaît la nécessité de prévoir, pour la fabrication ou le montage, deux pièces assemblées au lieu d'une seule.

Le dispositif de l'invention, dans son application privilégiée, constitue une servodirection pour véhicule à moteur, permettant de convertir un mouvement de rotation appliqué à un arbre d'entrée, relié au volant du véhicule, en un mouvement de rotation correspondant appliqué à un arbre de sortie, relié aux roues directrices de ce véhicule.

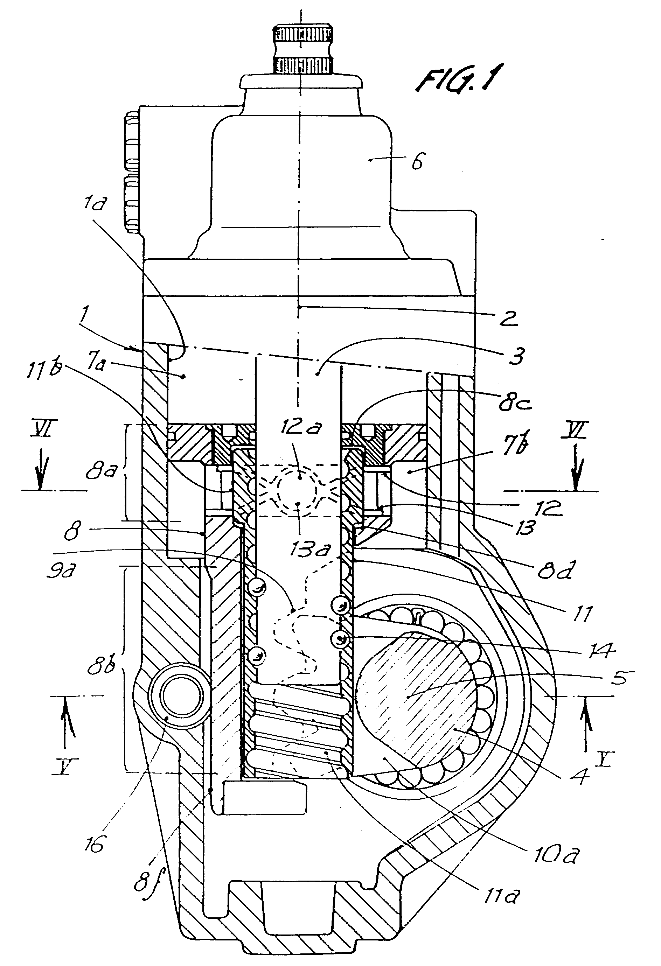

Ce dispositif comprend d'abord un boîtier 1 dont la partie supérieure la (dans la disposition illustrée sur la Figure 1) forme un cylindre de révolution autour d'un axe principal 2.

L'arbre d'entrée 3, sur lequel est appliqué le mouvement de rotation d'entrée, est logé dans le boîtier 1 suivant la direction de l'axe principal 2 et assujetti au boîtier, par tout moyen de type connu, de manière à être fixe en translation dans la direction de ce même axe 2.

L'arbre de sortie 4, qui subit le mouvement de rotation de sortie, est centré sur un axe secondaire 5 situé dans un plan différent de celui qui contient l'axe principal 2 et adopte une direction sensiblement perpendiculaire à celle de cet axe principal 2.

Un distributeur hydraulique rotatif 6, de type connu en soi, est logé dans la tête du boîtier 1, alimenté en fluide hydraulique sous pression et actionné par la rotation de l'arbre d'entrée 3 de manière à pouvoir soumettre des première et seconde chambres 7a, 7b, définies dans la partie cylindrique la du boîtier 1, à des pressions respectives susceptibles d'être différentes.

Ces chambres 7a, 7b sont séparées l'une de l'autre de façon étanche par la section d'étanchéité 8a d'un piston 8 qui se trouve logé dans le boîtier 1 de manière à pouvoir y coulisser suivant la direction de l'axe principal 2, notamment sous l'effet de la différence des pressions respectivement établies dans les chambres 7a et 7b.

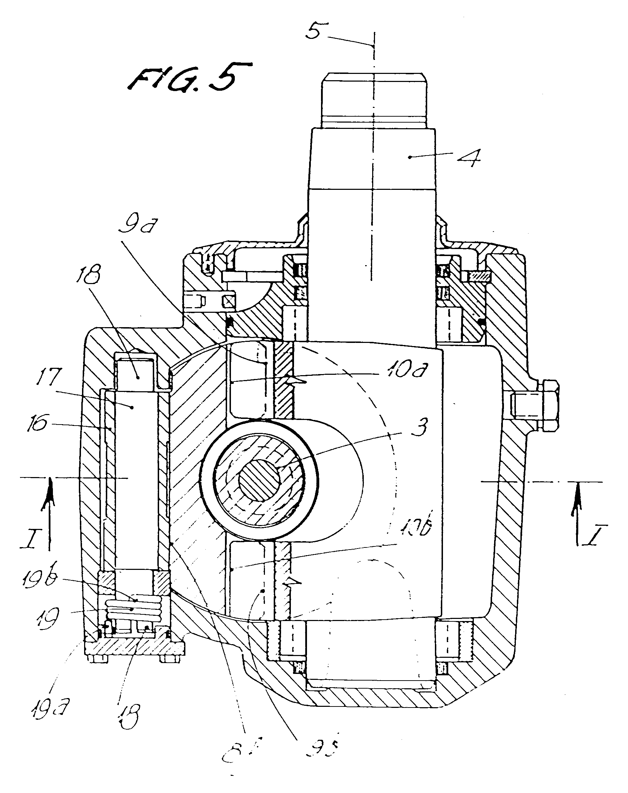

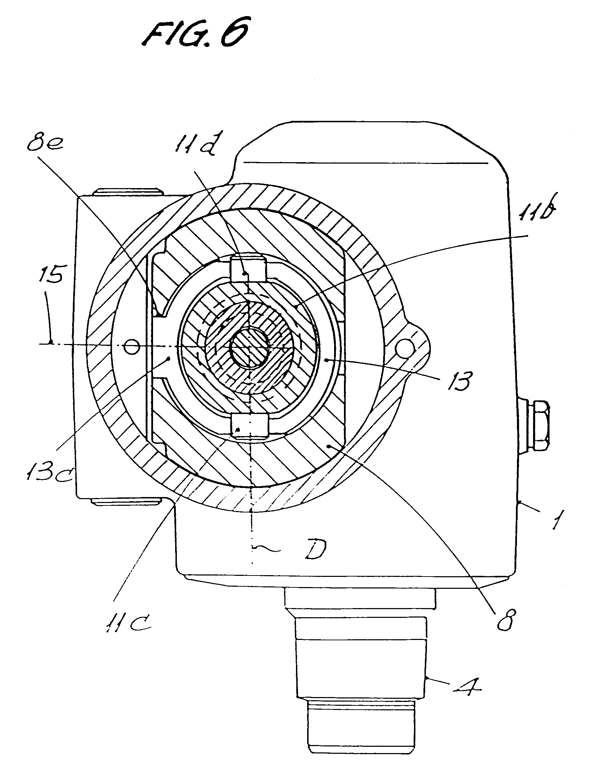

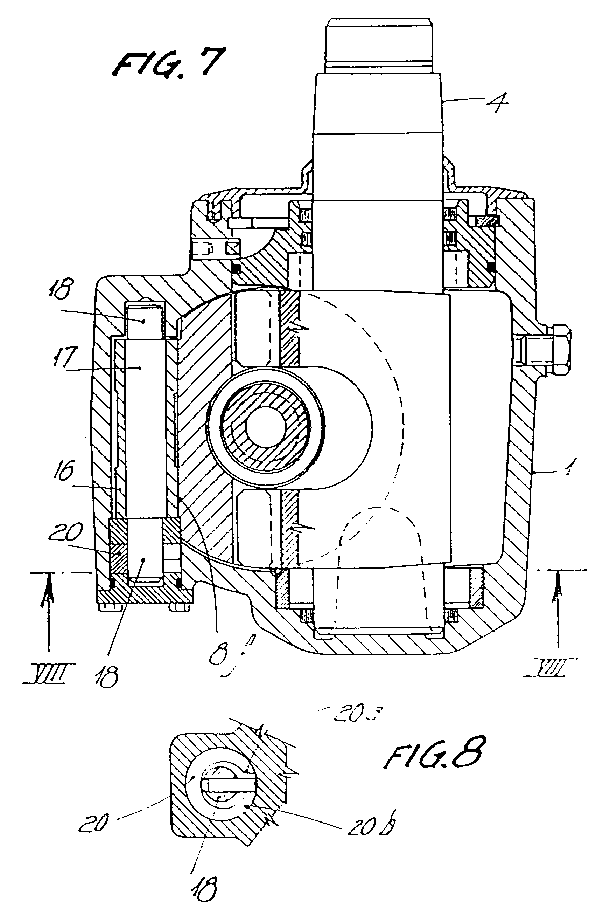

Ce piston 8, sensiblement coaxial à l'arbre d'entrée 3, entoure au moins partiellement ce dernier et présente, dans le prolongement de la section d'étanchéité 8a, une section de transmission de mouvement 8b qui, vue suivant la direction de l'axe principal 2 (Figure 5) présente un profil à deux branches en forme de U, entourant partiel lement l'arbre d'entrée 3.

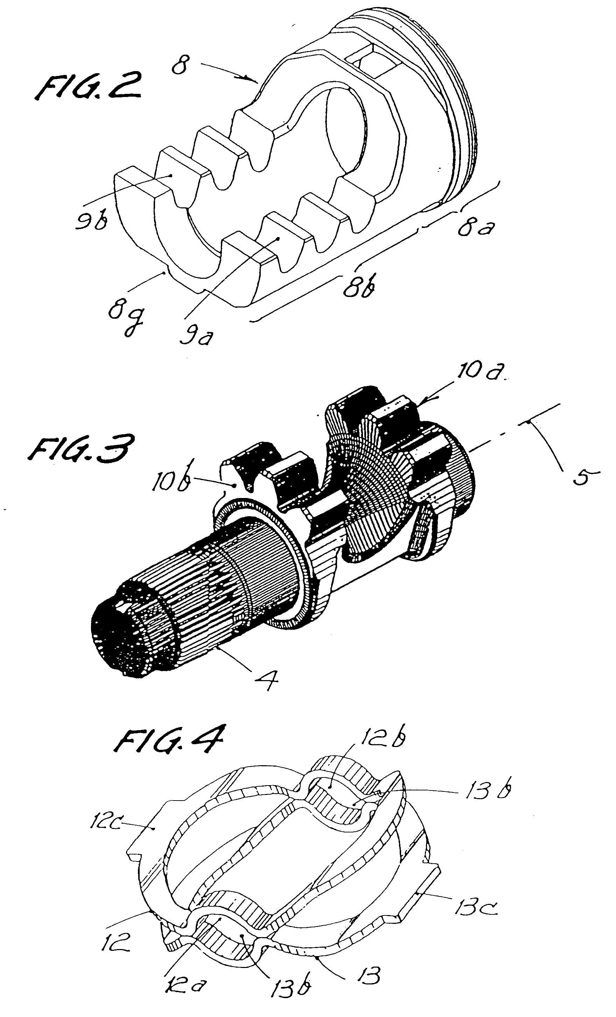

Les deux branches de ce profil en U sont conformées en crémaillères respectives 9a, 9b (Figure 2), engrenant de part et d'autre de l'arbre d'entrée 3 avec des secteurs dentés respectifs 10a, 10b centrés sur l'axe secondaire 5 et solidaire en rotation de l'arbre de sortie 4 (Figure 3).

Les lieux d'engrènement des deux crémaillères sur les deux secteurs dentés, pratiquement confondus avec l'axe principal 2 sur la Figure 1, sont sensiblement coplanaires entre eux et à cet axe principal 2.

Un convertisseur de mouvement, comprenant entre autres un manchon 11 essentiellement cylindrique, est logé entre l'arbre d'entrée 3 et le piston 8 pour convertir un mouvement de rotation de l'arbre en un mouvement de translation du piston 8, et permettre notamment de faire tourner l'arbre de sortie 4 même lorsque, par défaillance du système d'alimentation en pression hydraulique, la différence de pression entre les chambres 7a et 7b est nulle.

Le manchon 11 présente sur sa surface interne un chemin hélicoïdal 11a permettant, avec un chemin semblable de pas contraire prévu sur l'arbre 3, de piéger des billes de roulement 14.

Le manchon 11, dont la longueur est à peine inférieure à celle du piston 8 est logé avec jeu de l'intérieur de ce dernier et notamment à l'intérieur du profil en U formé par la section de transmission de mouvement 8b de ce piston.

Des moyens de fixation sont prévus pour interdire pratiquement toute rotation du manchon 11 autour de l'axe principal 2 par rapport au piston 8, et toute translation relative du manchon par rapport au piston, si ce n'est des translations suivant les deux directions perpendiculaires entre elles et à l'axe principal 2.

De préférence, comme le montre la Figure 1, l'arbre d'entrée traverse, de façon étanche, la section d'étanchéité 8a du piston 8, et ces moyens de fixation comprennent tout d'abord un élargissement radial 11b du manchon et des butées axiales 8c, 8d prévues dans la section d'étanchéité 8a du piston 8, en regard de l'élargissement radial 11b pour empêcher que les forces axiales éventuellement importantes s'exerçant entre le manchon 11 et le piston 8 ne provoquent une translation du premier par rapport au second suivant la direction de l'axe principal 2 dans quelque sens que ce soit.

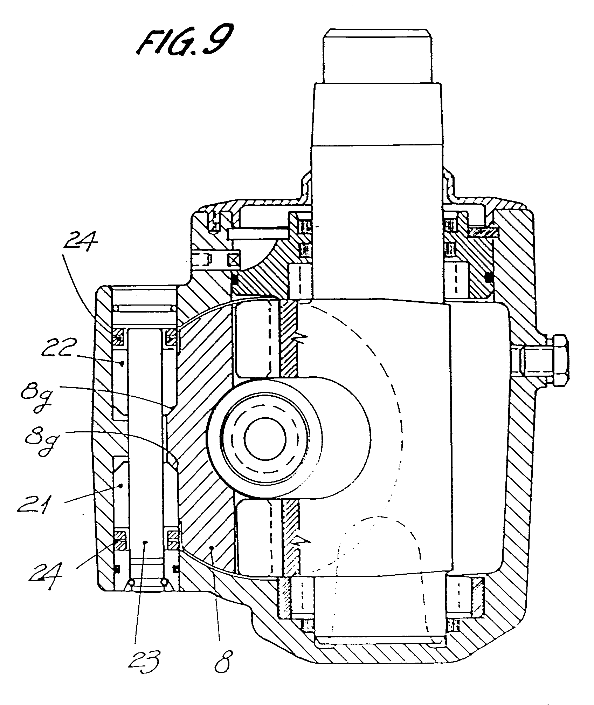

Les moyens de fixation du manchon 11 sur le piston 8 comprennent par ailleurs deux ergots 11c, 11d (Figure 6) saillant diamétralement de l'élargissement radial 11b et dont chacun est inséré dans deux demi-logements, tels que 12a, 13a (Figures 1 et 4), procurés par deux bagues élastiques non planes 12 et 13, par exemple en acier.

La taille des logements est choisie, par rapport à la taille des ergots, de manière que le seul débattement pratiquement possible des ergots 11c, 11d par rapport à leurs logements tels que 12a, 13a soit un coulissement de ces ergots, c'est-à-dire une translation, suivant leur direction diamétrale commune D (Figure 6).

Par ailleurs chaque bague élastique présente au moins une extension radiale telle que 12 c, 13c disposée à 90°, pour un référentiel angulaire centré sur cette bague, par rapport aux demi-logements formés par cette bague et accueillant les ergots 11c, 11d.

Le piston 8 présente lui-même des rainures, telles que 8e (Figure 6), chaque extension radiale telle que 13c étant reçue dans l'une de ces rainures et s'y trouvant logée à coulissement suivant sa direction radiale telle que 15 et en butée contre les bords de la rainure suivant une direction tangentielle à la bague qui porte cette extension radiale.

Le dispositif de l'invention comprend par ailleurs des moyens de poussée élastique, susceptibles de prendre plusieurs formes possibles, mais qui ont pour caractéristique commune de prendre appui sur le boîtier 1 pour appliquer, sur une surface de contact 8f que présente la section de transmission de mouvement 8b du piston 8 du côté opposé aux crémaillères 9a, 9b, une force élastique dirigée vers les secteurs dentés 10a, 10b.

Une force élastique, au sens de la présente description, est une force dont l'intensité varie peu lorsque la surface sur laquelle elle est appliquée subit un mouvement d'amplitude limitée, autour d'une position moyenne, suivant la direction d'application de cette force.

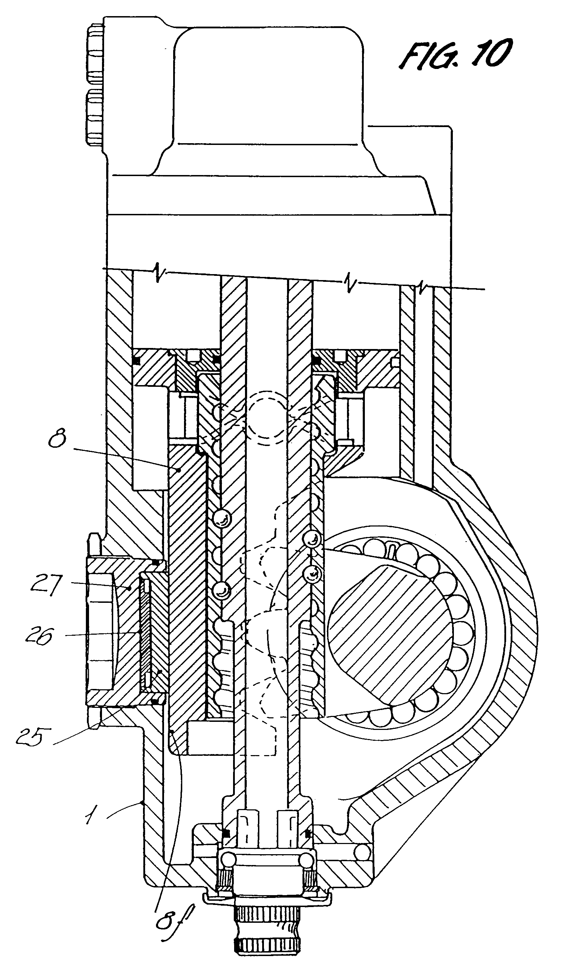

De préférence, les moyens de poussée élastique comprennent au moins un rouleau 16 (Figures 5 et 7) monté à rotation autour d'au moins un premier axe de rotation 17 sensiblement parallèle à l'axe 5 de l'arbre de sortie 4, le rouleau 16 roulant sur la surface de contact 8f tout en étant élastiquement sollicité vers elle.

Par exemple, le premier axe de rotation 17 du rouleau 16 est lié à un second axe de rotation 18, sensiblement parallèle au premier, excentré par rapport à lui, et élastiquement sollicité en rotation par rapport au boîtier 1 dans un sens propre à rapprocher le premier axe de rotation 17 et le rouleau 16 de la surface de contact 8f.

La sollicitation élastique du second axe 18 peut être obtenue grâce à un ressort à profil annulaire, tel que 19 ou 20, présentant deux extrémités telles que 19a, 19b, ou 20a, 20b adoptant le long de ce profil des positions angulaires relatives dont elles peuvent s'écarter élastiquement, la première de ces extrémités, telle que 19a ou 20a, étant fixée au boîtier 1, et la seconde extrémité, telle que 19b ou 20b, étant liée en rotation au second axe 18.

Ce ressort peut comporter plusieurs spires comme le ressort 19 représenté sur la Figure 5, ou être constitué d'un anneau ouvert à une seule spire et à ouverture élastique, comme le ressort 20 représenté aux Figures 7 et 8.

Les moyens de poussée élastique peuvent encore adopter une autre forme de réalisation, représentée sur la Figure 9.

Selon cette dernière, deux rouleaux 21 et 22 sont montés à rotation et à translation sur un axe 23 sensiblement parallèle à l'axe 5 de l'arbre de sortie 4.

Chaque rouleau est sollicité vers l'autre par une force élastique dirigée suivant l'axe 23 et exercée par tout moyen approprié, par exemple par des rondelles Belleville 24.

Une partie 8g au moins de la surface de contact du piston 8 est orientée parallèlement à l'axe principal 2 et obliquement par rapport à l'axe 23, de manière que chaque rouleau 21, 22, soit sollicité contre cette partie 8g de la surface de contact et y applique une force élastique présentant une composante dirigée vers les secteurs dentés 10a, 10b.

De préférence, les moyens élastiques 24 sont choisis de façon telle que leur déformation élastique autorise à donner à l'inclinaison de la partie 8g de la surface de contact par rapport à l'axe 23 et à l'aire d'appui des rouleaux sur cette partie des valeurs qui d'une part préservent l'intensité de la composante de force dirigée vers les secteurs dentés, et qui d'autre limitent le frottement produit, en plus du roulement, entre les rouleaux 21, 22 et la partie 8g de la surface de contact.

La Figure 10 illustre encore un autre mode de réalisation des moyens de poussée élastique qui, bien que globalement moins avantageux sur le plan technique que les solutions déjà décrites, présente un avantage économique et peut se montrer suffisant dans certains cas.

Dans ce mode de réalisation, le piston 8 est simplement poussé en direction des secteurs dentés au moyen d'un patin de frottement 25 sollicité dans cette direction par un ressort 26, prenant par exemple la forme d'une rondelle Belleville, et prenant appui sur un support 27 vissé dans le boîtier 1.

## Revendications

1. Dispositif d'assistance hydraulique, notamment utilisable comme servodirection pour un véhicule à moteur, et propre à convertir un mouvement de rotation d'entrée en un mouvement de rotation de sortie, ce dispositif comprenant au moins :
- un boîtier (1) dont une partie au moins forme un cylindre de révolution (1a) autour d'un axe principal (2) ;
- un arbre d'entrée (3) logé dans le boîtier suivant la direction de cet axe principal, fixe en translation suivant cette direction, et entraîné en rotation autour de cet axe principal par le mouvement de rotation d'entrée ;
- un arbre de sortie (4) non coplanaire à l'arbre d'entrée et de direction sensiblement perpendiculaire à celle de ce dernier ;
- un distributeur hydraulique rotatif (6) susceptible d'être actionné par rotation de l'arbre d'entrée pour provoquer une différence de pression entre des première et seconde chambres (7a, 7b) définies dans ledit cylindre ;
- un piston (8) logé dans le boîtier pour y coulisser axialement, en partie au moins sous l'effet de ladite différence de pression, ce piston étant sensiblement coaxial à l'arbre d'entrée (3), entourant en partie au moins ce dernier, et présentant d'une part une section d'étanchéité (8a) séparant les deux chambres de façon étanche et d'autre part une section de transmission (8b) dotée d'une crémaillère (9a) engrenant avec un secteur denté (10a) lié en rotation à l'arbre de sortie, et :
- un convertisseur de mouvement (11 à 14) disposé entre l'arbre d'entrée (3) et le piston (8) pour convertir un mouvement de rotation du premier en un mouvement de translation du second,
caractérisé en ce que la section de transmission (8b) du piston présente, vue suivant la direction dudit axe principal, un profil à deux branches en forme de U dont les branches forment toutes deux crémaillères (9a, 9b) et engrènent, en des lieux géométriques respectifs sensiblement coplanaires entre eux et audit axe principal, avec des secteurs dentés (10a, 10b) respectifs et solidaires l'un de l'autre et de l'arbre de sortie (4).

2. Dispositif suivant la revendication 1, caractérisé en ce que le convertisseur de mouvement (11 à 14) comprend d'une part un manchon (11) essentiellement cylindrique, logé avec jeu à l'intérieur du profil en forme de U formé par le piston (8), et présentant sur sa surface interne un chemin de billes hélicoïdal (11a), et d'autre part des moyens (8c, 8d, 8e, 11b, 11c, 11d, 12, 13 13b) de fixation du manchon sur le piston, propres à interdire pratiquement toute rotation relative du piston et du manchon autour dudit axe principal (2), et toute translation relative autre que des translations relatives suivant des directions perpendiculaires audit axe principal.

3. Dispositif suivant le revendication 2, caractérisé en ce que lesdits moyens de fixation comprennent :
- un élargissement radial (11b) du manchon ;
- des butées axiales (8c, 8d) formées par le piston et disposées en regard de l'élargissement radial du manchon ;
- deux ergots (11c, 11d) saillant diamétralement de l'élargissement radial ;
- deux bagues élastiques non planes (12, 13) formant ensemble deux logements à l'intérieur desquels les deux ergots sont respectivement insérés et peuvent coulisser suivant leur direction commune (D) sans liberté de rotation autour dudit axe principal ;
- au moins une extension radiale (12c, 13c) de chaque bague, disposée à 90°, pour un référentiel angulaire centré sur cette bague, par rapport à chaque logement (12a, 13a) partiellement formé par cette bague ; et
- au moins deux rainures (8e) prévues dans le piston, chaque extension radiale de chaque bague étant destinée à être reçue dans l'une de ces rainures et s'y trouvant logée à coulissement suivant sa direction radiale (15), et en butée contre elle selon une direction tangentielle à cette bague.

4. Dispositif suivant la revendication 3, caractérisé en ce que l'arbre d'entrée (3) traverse de façon étanche la section d'étanchéité du piston, et en ce que les butées axiales formées par le piston sont situées dans cette section d'étanchéité.

5. Dispositif suivant la revendication 1, caractérisé en ce qu'il comprend des moyens de poussée élastique (16 à 27) prenant appui sur le boîtier pour appliquer, sur une surface de contact (8f) que présente la section de transmission (8b) du piston du côté opposé aux crémaillères, une force élastique dirigée vers lesdits secteurs dentés.

6. Dispositif suivant la revendication 5, caractérisé en ce que lesdits moyens de poussée élastique comprennent au moins un rouleau (16, 21, 22) monté à rotation autour d'au moins un premier axe de rotation (17, 23) sensiblement parallèle à la direction de l'arbre de sortie, ce rouleau roulant sur ladite surface de contact tout en étant élastiquement sollicité vers elle.

7. Dispositif suivant la revendication 6, caractérisé en ce que le premier axe de rotation du rouleau est lié à un second axe de rotation (18), sensiblement parallèle au premier, excentré par rapport à lui, et élastiquement sollicité en rotation par rapport au boîtier (1) dans un sens propre à rapprocher le premier axe de rotation de ladite surface de contact.

8. Dispositif suivant la revendication 7, caractérisé en ce que le second axe de rotation (18) est sollicité par un ressort à profil annulaire (19, 20) présentant deux extrémités (19a, 19b ; 20a, 20b) adoptant le long de ce profil annulaire des positions angulaires relatives dont elles peuvent s'écarter élastiquement, une première (19a, 20a) de ces deux extrémités étant fixée au boîtier (1) et la seconde (19b, 20b) étant liée en rotation au second axe de rotation (18).

9. Dispositif suivant la revendication 8, caractérisé en ce que le ressort à profil annulaire est un anneau ouvert à une seule spire (20) et à ouverture élastique.

10. Dispositif suivant la revendication 5, caractérisé en ce que lesdits moyens de poussée élastique comprennent au moins un rouleau (21, 22) présentant un axe de rotation et de translation (23) sensiblement parallèle à la direction de l'arbre de sortie, ce rouleau étant élastiquement sollicité, par une force dirigée suivant cet axe de rotation et de translation, contre une partie au moins (8g) de la surface de contact qui se trouve orientée parallèlement à l'axe principal et obliquement par rapport audit axe de rotation et de translation.

## Claims

1. Hydraulic assistance device, which can especially be used as power-assisted steering for a motor vehicle, and suitable for converting an input rotational movement into an output rotational movement, this device comprising at least:
- a casing (1) at least one part of which forms a cylinder of revolution (1a) about a main axis (2);
- an input shaft (3) housed in the casing along the direction of this main axis, translationally fixed along this direction, and rotationally driven about this main axis by the input rotational movement;
- an output shaft (4) not coplanar with the input shaft and whose direction is substantially perpendicular to that of the latter;
- a rotary hydraulic directional control valve (6) capable of being actuated by rotation of the input shaft so as to give rise to a pressure difference between first and second chambers (7a, 7b) defined in the said cylinder;
- a piston (8) housed in the casing in order to slide axially therein, at least partially under the effect of the said pressure difference, this piston being substantially coaxial with the input shaft (3), at least partially surrounding the latter, and having, on the one hand, a sealing section (8a) separating the two chambers in a sealed fashion and, on the other hand, a transmission section (8b) endowed with a rack (9a) meshing with a toothed sector (10a) rotationally linked to the output shaft, and;
- a movement converter (11 to 14) arranged between the input shaft (3) and the piston (8) so as to convert a rotational movement of the first into a translational movement of the second,
characterized in that the transmission section (8b) of the piston has, seen in the direction of the said main axis, a profile with two branches in the shape of a U whose branches both form racks (9a, 9b) and mesh, at respective geometric sites, which are substantially coplanar with one another and with the said main axis, with respective toothed sectors (10a, 10b) which are integral with one another and with the output shaft (4).

2. Device according to Claim 1, characterized in that the movement converter (11 to 14) comprises, on the one hand, an essentially cylindrical sleeve (11), housed with clearance inside the U-shaped profile formed by the piston (8), and having, on its internal surface, a helical track for balls (11a), and, on the other hand, means (8c, 8d, 8e, 11b, 11c, 11d, 12, 13, 13b) for fixing the sleeve to the piston, suitable for preventing practically any relative rotation of the piston and of the sleeve about the said main axis (2), and any relative translation other than relative translations along directions perpendicular to the said main axis.

3. Device according to Claim 2, characterized in that the said fastening means comprise:
- a radial widening (11b) of the sleeve;
- axial stops (8c, 8d) formed by the piston and arranged facing the radial widening of the sleeve;
- two studs (11c, 11d) projecting diametrically from the radial widening;
- two non-plane elastic rings (12, 13) together forming two housings inside which the two studs are respectively inserted and can slide along their common direction (D) without freedom of rotation about the said main axis;
- at least one radial extension (12c, 13c) of each ring, arranged at 90°, for an angular reference frame centered on this ring, with respect to each housing (12a, 13a) partially formed by this ring; and
- at least two grooves (8e) provided in the piston, each radial extension of each ring being intended to be received in one of these grooves and being housed therein so as to slide along its radial direction (15), and in abutment against it along a direction tangential to this ring.

4. Device according to Claim 3, characterized in that the input shaft (3) passes, in a sealed fashion, through the sealing section of the piston, and in that the axial stops formed by the piston are situated in this sealing section.

5. Device according to claim 1, characterized in that it comprises elastic thrust means (16 to 27) bearing on the casing so as to apply, on a contact surface (8f) of the transmission section (8b) of the piston on the side opposite the racks, an elastic force directed towards the said toothed sectors.

6. Device according to Claim 5, characterized in that the said elastic thrust means comprise at least one roller (16, 21, 22) mounted rotatably about at least a first rotation pin (17, 23) substantially parallel to the direction of the output shaft, this roller rolling over the said contact surface whilst being elastically forced towards it.

7. Device according to Claim 6, characterized in that the first rotation pin of the roller is linked to a second rotation pin (18), substantially parallel to the first, eccentric with respect to it, and elastically forced in rotation with respect to the casing (1) in a direction suitable for bringing the first rotation pin close to the said contact surface.

8. Device according to Claim 7, characterized in that the second rotation pin (18) is forced by a spring with annular profile (19, 20) having two ends (19a, 19b; 20a, 20b) adopting, along this annular profile, relative angular positions from which they can move away elastically, a first (19a, 20a) of these two ends being fixed to the casing (1) and the second (19b, 20b) being rotationally linked to the second rotation pin (18).

9. Device according to Claim 8, characterized in that the spring with annular profile is an open ring with a single coil (20) and with elastic opening.

10. Device according to Claim 5, characterized in that the said elastic thrust means comprise at least one roller (21, 22) having a rotation and translation pin (23) substantially parallel to the direction of the output shaft, this roller being elastically forced, by a force directed along this rotation and translation pin, against at least one part (8g) of the contact surface which is oriented parallel to the main axis and obliquely with respect to the said rotation and translation pin.

## Patentansprüche

1. Hydraulische Unterstützungsvorrichtung, insbesondere verwendbar als Servolenkung für ein Kraftfahrzeug, dafür geeignet, eine Eingangs-Drehbewegung in eine Ausgangs-Drehbewegung umzuwandeln, wobei die Vorrichtung wenigstens enthält:
- ein Gehäuse (1), von dem wenigstens ein Teil einen Zylinder (1a) bildet, der zu einer Hauptachse (2) rotationssymmetrisch ist;
- eine Eingangswelle (3), die in dem Gehäuse entlang der Richtung dieser Hauptachse angeordnet ist, die entlang dieser Richtung translationsfest ist und die um diese Hauptachse durch die Eingangs-Drehbewegung gedreht wird;
- eine Ausgangswelle (4), die zur Eingangswelle nicht koplanar ist und entlang einer zur Richtung der Eingangswelle im wesentlichen senkrechten Richtung angeordnet ist;
- einen hydraulischen Drehverteiler (6), der durch Drehung der Eingangswelle betätigt werden kann, um eine Druckdifferenz zwischen einer ersten Kammer (7a) und einer zweiten Kammer (7b) hervorzurufen, die in dem Zylinder bestimmt sind;
- einen Kolben (8), der in dem Gehäuse angeordnet ist, um in diesem axial wenigstens teilweise unter der Wirkung der Druckdifferenz zu gleiten, wobei dieser Kolben im wesentlichen koaxial zur Eingangswelle (3) ist, diese wenigstens teilweise umgibt und zum einen einen Dichtigkeitsabschnitt (8a) aufweist, der die beiden Kammern in dichter Weise voneinander trennt, und zum anderen einen Übertragungsabschnitt (8b), der mit einer Zahnstange (9a) versehen ist, die in einen Zahnbogen (10a) eingreift, der drehfest mit der Ausgangswelle verbunden ist; und
- einen Bewegungswandler (11 bis 14), der zwischen der Eingangswelle (3) und dem Kolben (8) angeordnet ist, um eine Drehbewegung der Eingangswelle in eine Translationsbewegung des Kolbens zu wandeln,
dadurch gekennzeichnet, daß der Übertragungsabschnitt (8b) des Kolbens, in der Richtung der Hauptachse gesehen, ein Profil mit zwei Schenkeln in der Form eines U aufweist, dessen Schenkel zwei Zahnstangen (9a, 9b) bilden und die an zwei untereinander und zur Hauptachse im wesentlichen koplanaren geometrischen Orten in Zahnbögen (10a bzw. 10b) eingreifen, die miteinander und mit der Ausgangswelle (4) fest verbunden sind.

2. Vorrichtung nach Anspruch 1, dadurch gekennzeichnet, daß der Bewegungswandler (11 bis 14) zum einen eine im wesentlichen zylindrische Hülse aufweist, die mit Spiel im Inneren des vom Kolben (8) gebildeten U-förmigen Profils angeordnet ist und auf ihrer Innenfläche einen schraubenförmigen Kugelweg (11a) aufweist, und zum anderen Mittel (8c, 8d, 8e, 11b, 11c, 11d, 12, 13, 13b) zum Befestigen der Hülse an dem Kolben, die praktisch jegliche Relativdrehung des Kolbens und der Hülse um die Hauptachse (2) und jegliche relative Translation verhindern können, die nicht entlang zur Hauptachse senkrechten Richtungen erfolgt.

3. Vorrichtung nach Anspruch 2, dadurch gekennzeichnet, daß die Befestigungsmittel enthalten:
- eine radiale Erweiterung (11b) der Hülse;
- axiale Anschläge (8c, 8d), die von dem Kolben gebildet sind und gegenüber der radialen Erweiterung der Hülse angeordnet sind;
- zwei Vorsprünge (11c, 11d), die diametral von der radialen Erweiterung hervorstehen;
- zwei elastische, nicht flache Ringe (12, 13), die zusammen zwei Aufnahmen bilden, in deren Inneres die beiden Vorsprünge jeweils eingesetzt sind, die entlang ihrer gemeinsamen Richtung (D) ohne Möglichkeit einer Drehung um die Hauptachse gleiten können;
- wenigstens einen radialen Fortsatz (12c, 13c) jedes Ringes, die für eine auf diesen Ring zentrierte Winkelreferenz im Winkel von 90° bezüglich jeder Aufnahme (12a, 13a) angeordnet sind, die teilweise durch diesen Ring gebildet ist; und
- wenigstens zwei Nuten (8e), die in dem Kolben vorgesehen sind, wobei jeder radiale Fortsatz jedes Ringes dafür vorgesehen ist, in einer dieser Nuten aufgenommen zu werden, wobei er in dieser so angeordnet ist, daß er entlang seiner radialen Richtung (15) gleiten kann, und sich an dieser in einer zu diesem Ring tangentialen Richtung abstützt.

4. Vorrichtung nach Anspruch 3, dadurch gekennzeichnet, daß die Eingangswelle (3) den Dichtigkeitsabschnitt des Kolbens in dichter Weise durchquert und daß die von dem Kolben gebildeten axialen Anschläge in diesem Dichtigkeitsabschnitt angeordnet sind.

5. Vorrichtung nach Anspruch 1, dadurch gekennzeichnet, daß sie elastische Druckmittel (16 bis 27) enthält, die sich an dem Gehäuse abstützen, um auf eine Berührfläche (8f), die der Übertragungsabschnitt (8b) des Kolbens auf der zu den Zahnstangen entgegengesetzten Seite aufweist, eine zu den Zahnbögen gerichtete elastische Kraft aufzubringen.

6. Vorrichtung nach Anspruch 5, dadurch gekennzeichnet, daß die elastischen Druckmittel wenigstens eine Walze (16, 21, 22) aufweisen, die um wenigstens eine zur Richtung der Ausgangswelle im wesentlichen parallele erste Drehachse (17, 23) drehbar angebracht ist, wobei diese Walze auf der Berührfläche abrollt, während sie elastisch zu dieser beaufschlagt ist.

7. Vorrichtung nach Anspruch 6, dadurch gekennzeichnet, daß die erste Drehachse der Walze mit einer zweiten Drehachse (18) verbunden ist, die zur ersten im wesentlichen parallel und exzentrisch ist und die bezüglich des Gehäuses (1) elastisch in einer Richtung drehbeaufschlagt ist, die geeignet ist, die erste Drehachse an die Berührfläche anzunähern.

8. Vorrichtung nach Anspruch 7, dadurch gekennzeichnet, daß die zweite Drehachse (18) von einer Feder mit ringförmigem Profil (19, 20) beaufschlagt ist, die zwei Enden (19a, 19b; 20a, 20b) aufweist, die entlang dem ringförmigen Profil relative Winkelstellungen einnehmen, von denen sie sich elastisch entfernen können, wobei ein erstes (19a, 20a) dieser beiden Enden am Gehäuse (1) befestigt ist und das zweite (19b, 20b) drehfest mit der zweiten Drehachse (18) verbunden ist.

9. Vorrichtung nach Anspruch 8, dadurch gekennzeichnet, daß die Feder mit ringförmigem Profil ein geöffneter Ring mit einer einzigen Windung (20) ist, der elastisch geöffnet werden kann.

10. Vorrichtung nach Anspruch 5, dadurch gekennzeichnet, daß die elastischen Druckmittel wenigstens eine Walze (21, 22) enthalten, die eine Rotations- und Translationsachse (23) aufweist, die im wesentlichen parallel zur Richtung der Ausgangswelle ist, wobei diese Walze durch eine entlang dieser Rotations- und Translationsachse gerichtete Kraft elastisch gegen wenigstens einen Teil (8g) der Berührfläche beaufschlagt ist, der zur Hauptachse parallel und zur Rotations- und Translationsachse schräg ausgerichtet ist.
